# FASCICULE DE BREVET EUROPEEN

(11) **EP 2 637 864 B1**
(45) Date de publication et mention de la délivrance du brevet: **04.01.2017**
(21) Numéro de dépôt: 10784465.6
(22) Date de dépôt: 10.11.2010
(51) Int. Cl.: B32B 19/04, B32B 27/06, B32B 27/32, H01B 3/04, H01B 7/02, H01B 17/60, B32B 27/20

(54) **RUBAN A BASE DE MICA**
BAND AUF BASIS VON GLIMMER
MICA-BASED TAPE

(43) Date de publication de la demande: 18.09.2013
(73) Titulaire: Cogebi S.A., 1651 Lot (BE)
(72) Inventeur: PRIEUR, Benoît, 1140 Bruxelles (BE); DEL REY, Francisco, 1348 Louvain-la-Neuve (BE)
(74) Mandataire: Pronovem
(86) Numéro de dépôt international: PCT/EP2010/067247
(87) Numéro de publication internationale: WO 2012/062363

(56) Documents cités:
- EP-A1- 0 790 623
- WO-A2-2005/123825
- US-A1- 2004 226 740
- SHOWA ELECTRIC WIRE CO LTD: "abrégé WPI de JP-A-52-132045", WPI/THOMSON, vol. 1977, no. 50, 5 novembre 1977 (1977-11-05), XP002636523,
- HITACHI LTD: "abrégé WPI des JP-A-11-113204", WPI/THOMSON, vol. 1999, no. 27, 23 avril 1999 (1999-04-23), XP002636522,
- VOGELMANN M: "GLIMMER ALS HOCHLEISTUNGSISOLIERSTOFF DER ELEKTROTECHNIK", TECHNISCHE RUNDSCHAU, HALLWAG AG, CH, vol. 82, no. 45, 9 novembre 1990 (1990-11-09), pages 54-55,57, XP000228018, ISSN: 1023-0823
- ENGELHARDT K: "THE USE OF CORONA RESISTANT POLYIMIDE FILMS IN HV ROTATING MACHINES", IBM TECHNICAL DISCLOSURE BULLETIN, INTERNATIONAL BUSINESS MACHINES CORP. (THORNWOOD), US, vol. 40, no. 8, 1 août 1997 (1997-08-01), pages 17-19, XP000735563, ISSN: 0018-8689

## Description

### Objet de l'invention

La présente invention se rapporte à un ruban multicouche comprenant au moins une couche de mica, à son utilisation comme couche isolante électrique et à un câble électrique comprenant un tel ruban.

### Etat de la technique

Les caractéristiques qui sont particulièrement souhaitées dans des gaines pour des câbles électriques de haute performance sont un poids léger et un faible diamètre, une bonne résistance au percement, au cheminement d'arc et à l'abrasion ainsi qu'une bonne stabilité thermique, une faible inflammabilité, une insensibilité à l'eau et aux solvants courants, et un contour de surface externe lisse.

Des rubans à base de mica ont souvent été utilisés pour l'isolation de fils ou de câbles électriques éventuellement conjointement avec une ou plusieurs couches de polymère. Le papier mica est en effet connu pour ses excellentes propriétés thermiques et diélectriques qui offrent au produit final utilisant le papier mica une bonne résistance au feu et permet d'obtenir des valeurs d'isolation élevées. Le papier mica est également très stable chimiquement envers une large plage de produits chimiques, notamment ceux qui favorisent l'hydrolyse.

Industriellement, les rubans à base de papier mica sont fabriqués à partir de papier mica préparé tel que décrit ci-après. Le mica est mis en suspension sous forme de pulpe dans de l'eau, puis transformé en un papier mica par une filtration et un séchage à l'aide de machines similaires aux machines à papier classique, le produit obtenu, appelé papier mica, comprend à ce stade 100% de mica et se présente sous la forme de feuilles présentant un grammage comprise entre 25 et 360 g/m². Les feuilles peuvent ensuite être enroulées en continu et se présenter sous la forme de bobines. Avant l'enroulement, le papier mica peut être avantageusement imprégné d'au moins une résine de préférence organique ou silicone. Le papier mica imprégné pourra éventuellement être contrecollé à un support qui peut être de n'importe quel type et en particulier se présenter sous la forme d'un tissu en fibre de verre ou sous la forme d'une feuille ou film de polymère. Le produit à base de mica ainsi stratifié peut éventuellement être enroulé.

Le document US-4 286 010 enseigne la combinaison de papier mica avec un renfort de tissu de verre qui est lié avec un imprégnant élastomère, en l'occurrence un polybutadiène, appliqué sous la forme d'une solution dans du toluène. Cet imprégnant est appliqué à la fois au papier mica et au tissu de verre. Les deux couches sont ensuite mises en contact l'une avec l'autre, et la solution d'imprégnation imprègne simultanément le papier mica et le tissu de verre permettant de lier les deux couches. Le produit obtenu se présentant sous la forme d'une feuille ou d'un ruban de mica comprend donc une couche de polybutadiène intercalée entre la couche de papier mica et le tissu de verre.

Le document US-4 704 322 enseigne également l'utilisation d'un matériau d'imprégnation époxydé pour un tissu de verre associé à une feuille de papier mica. La solution d'imprégnation est appliquée à l'ensemble des couches constituées par le papier mica et le tissu de verre pendant ou après la mise en contact des deux couches. La structure se présente donc sous la forme d'un produit présentant une résine époxyde sur la surface du papier mica et formant une liaison avec le tissu. Notons également que les tissus de verre ayant une structure ouverte, l'imprégnant peut migrer facilement vers la surface externe du support en tissu de verre. De ce fait, la surface libre du papier mica peut-être contaminée par l'imprégnant par exemple lors du bobinage du produit obtenu ou lors de l'enrubannage du ruban autour d'un câble. Ceci peut également entraîner une adhésion du ruban à base de mica sur le conducteur destiné à réaliser le câble à isoler et ultérieurement être la cause de défauts lors du dénudage des câbles.

Le document WO2009/147417 décrit un fil ou un câble conducteur comprenant deux couches isolantes de PEEK encapsulant éventuellement une couche de mica. Le PEEK est le polymère thermoplastique présentant la plus haute tenue en température connue en utilisation continue, et présente la meilleure résistance au feu parmi la classe des polymères techniques. Néanmoins, son coût est très élevé, sa mise en oeuvre est délicate et nécessite des dispositifs très spécialisés. En outre, les propriétés mécaniques de ce matériau sont peu adaptées à ce genre d'application (enrubannage de câbles).

Il est également connu de disperser des paillettes de mica dans un polymère, typiquement en passant par une étape intermédiaire de mise en suspension ou en solution. Le document japonais JP-60/253 105 A2 décrit des fils métalliques (qui sont décrits comme résistants au claquage diélectrique et au percement) formés en appliquant sur un conducteur une couche de 28 µm d'un mélange comprenant un polyimide aromatique et 1 à 33% de particules de mica. Le mica y est présent sous forme de charge et en particulier sous forme de particules dispersées, servant à renforcer le polymère.

### Buts de l'invention

La présente invention vise à fournir un ruban à base de mica destiné à l'enrubannage de câbles électriques ne présentant pas les inconvénients des rubans isolants de l'art antérieur.

En particulier, la présente invention vise à proposer un produit isolant à base de mica présentant une haute résistance au feu.

La présente invention vise également à proposer une solution qui permet de remplacer l'utilisation des supports actuellement utilisés tels que la soie ou le tissu de verre par un matériau de moindre coût et de fabrication aisée mais présentant des performances à la flamme équivalentes ou meilleures que celles présentes dans les matériaux actuellement utilisés comme support.

Enfin, la présente invention vise à prévenir les risques de collage entre les spires successives du produit enrubanné réalisant le câble, problème souvent rencontré avec les rubans ou supports actuellement utilisés.

D'autres avantages apparaîtront dans la description de l'invention.

### Résumé de l'invention

La présente invention concerne un ruban multicouche (1) comprenant au moins:
- une couche (3) essentiellement à base de mica,
- une couche polymérique (2) comprenant de 60 à 85% en poids d'une charge minérale (4) et 15 à 40% en poids d'un polymère qui est sélectionné parmi le groupe consistant en polyoléfine, polyester, polyamide et polyoléfines halogénées.

Par « couche essentiellement à base de mica », il faut entendre une couche de mica, comprenant éventuellement de faibles niveau d'impuretés et éventuellement associée à une résine d'imprégnation.

Par résine d'imprégnation, il faut entendre une résine ajoutée par capillarité au papier mica après sa mise en forme.

Selon des modes préférés de l'invention, le ruban multicouche comporte au moins une, ou une combinaison quelconque appropriée des caractéristiques suivantes :
- ledit polymère est sélectionné parmi le groupe consistant en PET et ses copolymères PA6, PA6,6, PA11, PA12, et PVC, PVDF, et PTFE;
- le polymère est une polyoléfine sélectionnée parmi le groupe consistant en polyéthylène, polypropylène, copolymère de propylène et copolymères d'éthylène et d'une alpha-oléfine comprenant 3 à 8 carbones ;
- la polyoléfine est un polyéthylène ou un mélange de polyéthylènes de différentes densités ;
- le polymère comprend (consiste en) du HDPE ;
- la couche essentiellement à base de mica est une couche de papier mica, éventuellement imprégnée par une résine ;
- la résine d'imprégnation de la couche de mica est à base de silicone ;
- la couche essentiellement à base de mica (3) est collée à la couche polymérique (2) au moyen d'un adhésif, ledit adhésif étant de préférence un adhésif de type silicone ;
- la charge minérale est sélectionnée parmi le groupe constitué de carbonate de calcium, sulfate de calcium, sulfate de barium, silicate d'aluminium (hydraté tel que la kaolinite par exemple), l'alumine, l'hydroxide d'aluminium (ATH), magnésium, l'oxyde de zinc, le mica, la craie, le talc, le dioxyde de titane, la silice, l'argile (tel que la bentonite ou la montmorillonite), le kieselguhr (diatomées) ou la dolomite et leur mélange ;
- la charge minérale est sélectionnée parmi le groupe constitué de carbonate de calcium, des diatomées (kieselguhr) et/ou de la silice et leur mélange ;
- la couche polymérique présente une porosité (5) comprise entre 40 et 75% en volume, de préférence entre 50 et 60% en volume ;
- la porosité de la couche polymérique (2) est de type fermée ;
- la couche polymérique (2) comprend en outre un agent de couplage permettant de coupler la charge minérale à la polyoléfine ;
- l'agent de couplage est un silane, de préférence un beta-(3,4-époxycyclohexyl)éthyl triméthoxy-silane.

Un second aspect de l'invention concerne un câble électrique comprenant un coeur conducteur, une gaine intermédiaire formée par enrubannage d'un ruban multicouche selon l'invention décrite ci-avant et une gaine externe polymérique isolante.

Un troisième aspect de l'invention concerne l'utilisation du ruban multicouche selon l'invention pour l'enrubannage d'un conducteur électrique.

### Brève description des figures

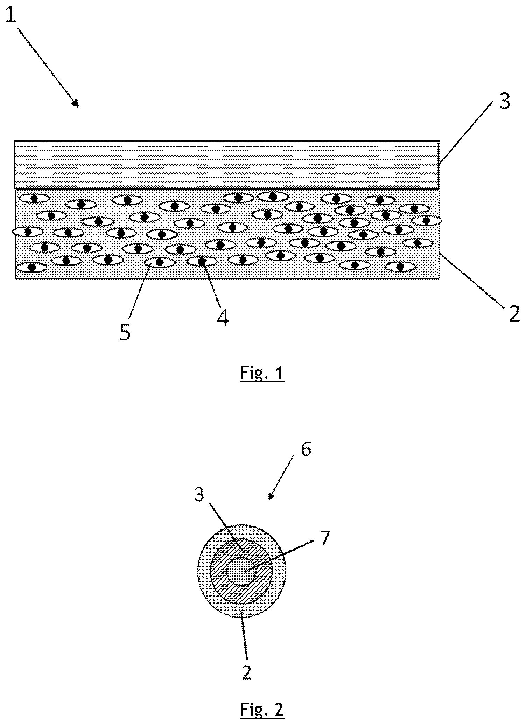

La figure 1 représente schématiquement une coupe transversale d'un exemple de ruban de mica selon l'invention.

La figure 2 représente schématiquement une coupe d'un câble isolé au moyen d'un ruban de mica selon l'invention.

La figure 3 représente une vue latérale d'un câble autour duquel on enroule un ruban de mica selon l'invention, le câble isolé comprenant une couche d'enrobage supplémentaire.

La figure 4 représente un câble comprenant deux conducteurs et dont l'isolation est renforcée par un ruban de mica selon l'invention.

La figure 5 représente des résultats comparatifs d'exposition à la flamme selon le test flamme BS6387 cat. C.

La figure 6 représente la courbe de déformation an fonction de la charge appliquée d'un support polymérique utilisé dans les exemples (ecoprint™ 100).

### Légende des figures

1. Ruban de mica multicouche
2. Couche support polymérique
3. Papier mica
4. Charge minérale
5. Cavité (porosité fermée)
6. Câble isolé par un ruban mica
7. Conducteur
8. Couche isolante supplémentaire (gaine isolante)
9. Couche d'assemblage

### Description détaillée de l'invention

La présente invention concerne un ruban multicouche isolant 1 utilisé principalement pour l'isolation de câbles électriques. Ces rubans sont généralement enroulés de manière hélicoïdale autour de ces conducteurs électriques afin d'en assurer l'isolation.

Le ruban de l'invention comprend une couche essentiellement à base de mica et de préférence en papier mica dont la résistance au feu est particulièrement élevée. Le papier mica est utilisé pour ses propriétés d'isolant électrique et de résistance à la chaleur.

De préférence la couche essentiellement à base de mica est un papier mica. Par papier mica, on entend une feuille de mica obtenue par filtration à partir d'une solution aqueuse de mica exfolié, le filtrat étant ensuite séché. Ce papier mica est de préférence imprégné d'une résine améliorant ses propriétés mécaniques et éventuellement sa résistance à l'eau.

De préférence, l'imprégnation de la résine représente entre 5 et 30% en poids de la couche de papier mica imprégné. De préférence, la résine d'imprégnation représente 9 à 22% en poids du papier imprégné.

Notons que le papier mica préféré obtenu par filtration et imprégnation ultérieure par une résine diffère des feuilles de mica obtenues par dispersion de mica dans une résine polymérique en ce que le mica forme dans le papier mica imprégné une phase continue, permettant le maintient d'une bonne tenue mécanique même au-delà de la température de ramollissement ou de dégradation de la résine d'imprégnation.

De préférence, le papier mica de l'invention présente un grammage (masse par unité de surface) compris entre 20 et 400 g/m². Plus avantageusement encore entre 75 et 360 g/m².

Dans la présente invention, le papier mica est mécaniquement solidaire d'une couche polymérique 2. Cette couche peut être liée au moyen d'un adhésif, ou par tout autre moyen connu de l'homme du métier (par exemple par revêtement par extrusion).

Cette couche polymérique comprend une charge minérale inerte importante. Cette charge représente au moins 60% en poids de cette couche, de préférence au moins 70% en poids et avantageusement, environ 80% en poids de la couche de polymère. Cette charge permet en particulier de maintenir une tenue mécanique suffisante dans la couche polymérique en évitant la formation et le détachement de goutte lors de la fusion de la matrice polymérique et ceci jusqu'à la carbonisation complète de cette couche. La charge permet aussi de réduire la migration de produits de dégradations conducteurs au travers du papier mica, ce qui permet d'améliorer la résistance au feu des propriétés diélectriques du ruban obtenu.

Par couche de polymère, ou couche polymérique, on entend une couche à matrice polymérique, comprenant éventuellement des additifs usuels. Cette couche peut aussi être décrite comme une couche minérale comprenant un liant polymérique, le liant formant une phase continue.

Afin de permettre une mise en oeuvre aisée de cette couche de polymère 2, de préférence, la charge n'excèdera pas 85% en poids de la couche de polymère. Idéalement, cette charge minérale n'excèdera pas 80% en poids de la couche de polymère.

La charge minérale utilisée est de préférence sélectionnée parmi le groupe consistant en carbonate de calcium, sulfate de calcium, sulfate de barium, silicate d'aluminium (hydraté tel que la kaolinite par exemple), l'alumine, l'hydroxide d'aluminium (ATH), magnésium, l'oxyde de zinc, le mica, la craie, le talc, le dioxyde de titane, la silice, l'argile (tel que la bentonite ou la montmorillonite), le kieselguhr (diatomées) ou la dolomite et leur mélange. De préférence, la charge minérale comprendra du carbonate de calcium, des diatomées (kieselguhr) et/ou de la silice.

La charge minérale sera finement divisée et se présentera sous forme de particules 4, présentant des dimensions typiquement inférieures à 50µm, de préférence inférieure à 10 µm, avantageusement inférieure à 2µm.

De manière alternative, la charge minérale pourra comprendre des fibres minérales tels que fibres de verre ou fibre de basalte. Ces fibres se présenteront de préférence sous la forme de fibres courtes et présenteront une faible adhésion interfaciale, de façon à ne pas rigidifier le ruban de manière trop importante (faible transfert de contrainte à l'interface).

Afin de réduire la densité du ruban 1 et d'améliorer ses propriétés mécaniques, la couche de polymère 2 présentera de préférence une porosité importante sous forme de nombreuses cavités 5. Cette porosité sera caractérisée par le rapport entre la densité apparente de la couche de polymère et sa densité théorique.

L'amélioration des propriétés mécaniques consiste principalement à obtenir un allongement à la limite élastique (ε_{y}) de la couche de polymère 2 le plus faible possible, compatible avec le procédé ultérieur d'enrubannage. De préférence, cette déformation à la limite élastique sera inférieure à l'allongement à la rupture du papier mica 3. En effet, si l'allongement à la limite élastique du support polymérique 2 est trop important, ce support pourrait masquer des défauts de continuité du mica 3 sous-jacent lors de l'enroulement du ruban autour d'un câble 7 à isoler. Ce masquage des défauts pourrait présenter un risque de défaut majeur des câbles isolés par le ruban de l'invention.

Pour régler cet allongement à la rupture, on pourra optimiser à la fois la porosité et la concentration en charge minérale. Un avantage de l'utilisation d'une couche polymérique poreuse, est que la réduction de l'allongement à la rupture est obtenue sans réduire la souplesse du film polymérique.

Cette porosité permet aussi de réduire la densité de la couche carbonée résultant d'une exposition prolongée à une flamme, et par ce fait, réduit la conductivité thermique de l'isolant.

la porosité sera de préférence une porosité de type fermée, permettant ainsi de préserver les propriétés barrière de la couche continue de polymère. Cette barrière permettra en particulier d'empêcher la migration de liquide ou de gaz vers la couche de mica. Ces diffusants liquides ou gazeux pouvant en effet induire une réduction de la résistance au claquage de la couche de mica 3.

Ce type de porosité fermée peut par exemple être obtenu par élongation de la couche de polymère 2 lors de la solidification de celle-ci. En effet, la différence de propriétés mécanique entre la charge minérale et la matrice polymérique induit alors un décollement de l'interface et l'apparition de cavités ou vides 5 dans la structure. Ce type de structure est par exemple obtenu par extrusion-soufflage d'un polymère chargé tel que décrit dans le document US2002/0041060 incorporé ici par référence.

De manière alternative, la porosité fermée pourra être obtenue par l'adjonction d'agent moussant générant un gaz lors du processus de production de la couche polymérique. Ce type d'agent peut par exemple être de l'azodicarbonamide, ou tout autre agent moussant connu de l'homme de du métier.

De préférence, la couche de polymère utilisée comprendra une polyoléfine ou un mélange de polyoléfine, tel que du polypropylène ou du polyéthylène. De préférence, le polymère de ladite couche de polymère consistera essentiellement en polyéthylène. Le polymère comprendra avantageusement du polyéthylène haute densité (HDPE). De manière préférée la couche de polymère de l'invention comprendra un mélange de polyéthylène de différentes structures (HDPE, MDPE, LDPE, LLDPE,...).

Outre les additifs usuels (neutralisants, antioxydants,...) on pourra avantageusement ajouter des agents de couplage tels que des agents de couplage a base de silanes, en particulier du beta-(3,4 époxycyclohexyl) éthyltriméthoxysilane (vendu sous le nom commercial « silquest A186 Silane » par Crompton).

Avantageusement, le polyéthylène de la couche de polymère sera réticulé, afin d'améliorer ses propriétés de résistance au feu.

De manière alternative, la matrice polymérique comprendra (ou consistera essentiellement en) des polyesters, des polyamides, des polyoléfines halogénées, chlorées ou fluorée (PVC, PVDC, PVDF, PTFE,...) ou des mélanges de ces polymères.

De manière préférées, les polymères utilisés pourront être réticulés par tout procédé connu de l'homme de métier afin d'en améliorer la tenue thermique.

L'épaisseur de la couche polymérique est de préférence comprise entre 25 et 200μm, plus avantageusement, elle sera comprise entre 50 et 150μm.

Un autre aspect de l'invention concerne un câble électrique 6 isolé par un ruban 1 de l'invention, dans lequel le ruban 1 est enroulé de manière hélicoïdale autour du coeur conducteur 7 du câble, les spires de l'enroulement étant jointives, et présentant éventuellement un recouvrement afin d'assurer la continuité de l'isolant.

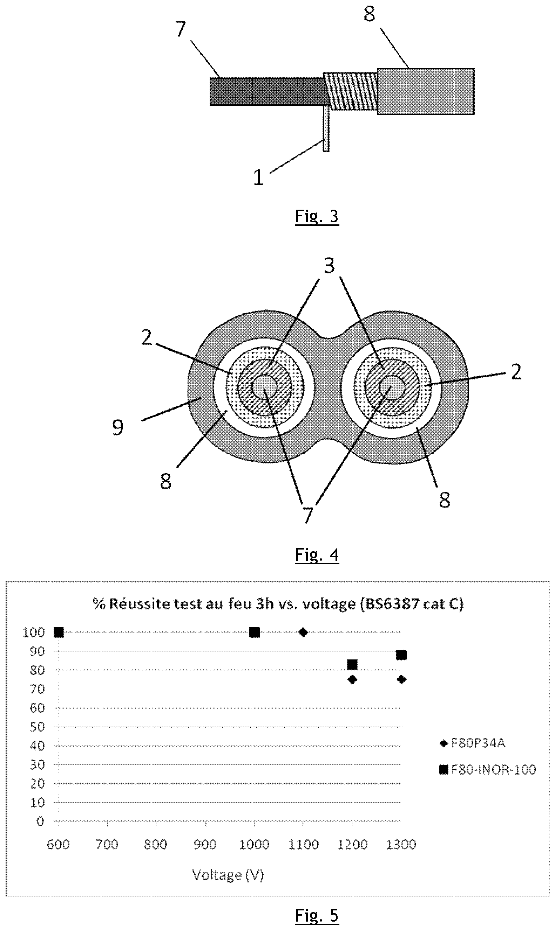

Les câbles isolés ainsi obtenus seront généralement enrobés par un isolant supplémentaire 8 dans une étape ultérieure. Cette étape d'enrobage sera généralement faite par extrusion concentrique autour du câble isolé. Lors ce cette étape d'enrobage, les câbles pourront éventuellement être groupés en bottes de plusieurs conducteurs tel que représenté à la figure 4(monophasé, tri-phasé, éventuellement plus neutre et terre, ou câbles de commande ou de transmission de données multipolaires).

### Exemple

Un support à base de polyéthylène commercialisé par Taiwan Lung Meng Technology Co. Ltd. sous le nom de RP rich mineral paper a été utilisé. Ce produit est commercialisé en Europe sous le nom d'Eco-Sprint. Ce support comprend une concentration en poids de 80% de charge minérale et 20% de polyéthylène. Le point de fusion de ce polyéthylène, mesuré par DSC est d'environs 128,6°C. Ce support présente une épaisseur de 100µm et une densité apparente de 1,2. Cette densité correspond à une porosité représentant un peu plus 50% du volume totale de la couche.

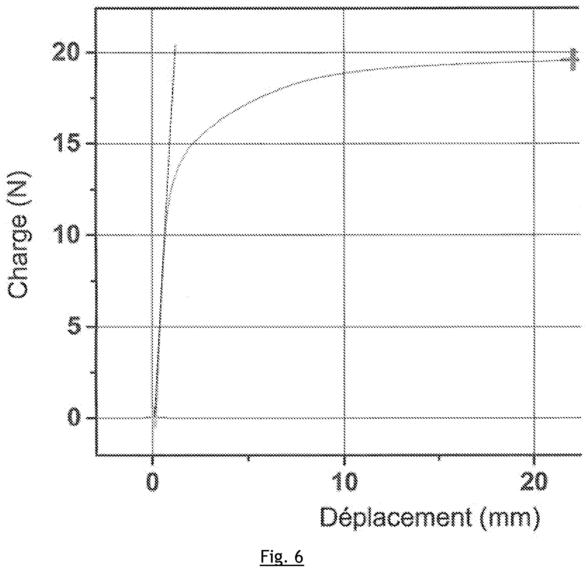

La figure 6 représente la courbe de déformation de ce support Eco-sprint en fonction de la charge. Ce test a été effectué à température ambiante. L'épaisseur du film testé était de 124µm, pour une largeur de 15mm et une longueur entre les mâchoires de la machine de traction de 100mm.

Ce support a été contrecollé à un papier mica Phlogopite de 82 g/m² imprégné d'un adhésif à base de silicone (adhésif à base de polydiméthyl siloxane fourni par dow corning) avec une teneur en liant de 11,4 g/m². Le poids total de la construction est de 237.5 g/m².

Les rubans obtenus ont été utilisés pour enrubanner deux conducteurs afin d'en tester l'isolation dans des conditions d'exposition au feu. Les rubans ont été enroulés en deux passes successives, chaque passe présentant un recouvrement de 20% entre deux spires successives.

Les résultats des tests d'exposition à la flamme selon la norme BS6387 cat. C sont représentés à la figure 5. L'échantillon de l'exemple est désigné par la référence F80-INOR100. Il est comparé dans cette figure à un échantillon dénommé Firox 80P34A. Il s'agit d'un ruban de même épaisseur de papier mica phlogopite contrecollé sur une soie de verre en guise de support (art antérieur).

La figure 5 représente les pourcentages de réussite du test (3h15) en fonction des tensions entre conducteurs pour le ruban de l'exemple (F 80-INOR-100) comparé à l'échantillon de référence (Firox 80P34A). Ces résultats représentent le rapport du nombre de claquage par rapport au nombre d'échantillons en fonction d'une exposition à une flamme pendant 3h. De manière surprenante, on observera que la performance du ruban a été améliorée par la substitution du support en soie de verre par le support de l'exemple.

En effet, Il est communément admis que des supports type film organique (Ex. PE, PET, etc.) utilisés comme support pour la fabrication du ruban mica pour câble diminue fortement les performances d'isolation électrique du produit lorsqu'il est soumit à la flamme par rapport à des rubans dont le support est un tissu de soie de verre. Cette réduction des performances est généralement interprétée comme un résultat de la migration de produits de combustion conducteurs au sein du papier mica.

Par ailleurs, le prix élevé des tissus en verre est un facteur qui peut limiter l'utilisation dans certaines applications des rubans qui l'utilisent comme support. En outre, le caractère ouvert de ces tissus de verre n'offre pas beaucoup d'isolation au papier mica par rapport à des vapeurs en provenance de la gaine du conducteur. Ces vapeurs peuvent alors se condenser dans les interstices du papier mica, ce qui, pour certains types de gaine peut diminuer le temps de survie du câble exposé à la flamme.

Le caractère fermé du support polymérique de l'invention permet aussi d'encapsuler les produits utilisés lors de la préparation du ruban à l'interface entre les deux couches, en particulier les adhésifs. Cette barrière peut par exemple permettre d'éviter une adhésion trop importante du mica sur le conducteur, ce qui facilite le dénudage de ce conducteur et évite la possibilité de mauvais contact induit par des résidus de mica.

Des tests comparatifs ont aussi été entrepris afin de vérifier l'impact du ruban polymérique seul. Dans cette expérience, la couche de mica a été supprimée. Dans ce cas, les câbles testés ne maintiennent pas d'isolation même pour des tensions inférieures à 600V. La couche minérale laissée par le support après combustion ne peut donc expliquer à elle seule l'amélioration des propriétés du ruban par rapport au ruban supporté par du tissus de verre (Firox 80P34A).

## Revendications

1. Ruban multicouche (1) comprenant au moins:
- une couche (3) essentiellement à base de mica,
- une couche polymérique (2) comprenant de 60 à 85% en poids
d'une charge minérale (4) et 15 à 40% en poids d'un polymère et dans lequel ledit polymère est sélectionné parmi le groupe consistant en polyoléfine, polyester, polyamide et polyoléfines halogénées.

2. Ruban multicouche selon la revendication 1 dans lequel le polymère est une polyoléfine sélectionnée parmi le groupe consistant en polyéthylène, polypropylène, copolymère de propylène et copolymères d'éthylène et d'au moins une alpha-oléfine comprenant 3 à 8 carbones.

3. Ruban multicouche selon la revendication 2 dans lequel la polyoléfine est un polyéthylène ou un mélange de polyéthylènes de différentes densités.

4. Ruban multicouche selon la revendication 3 dans lequel le polyéthylène comprend un HDPE.

5. Ruban multicouche selon l'une quelconque des revendications précédentes dans lequel la couche essentiellement à base de mica est une couche de papier mica, éventuellement imprégnée par une résine.

6. Ruban multicouche selon la revendication 5, **caractérisé en ce que** la résine d'imprégnation de la couche de mica est à base de silicone.

7. Ruban multicouche selon l'une des revendications précédentes, dans lequel la couche essentiellement à base de mica (3) est collée à la couche polymérique (2) au moyen d'un adhésif, ledit adhésif étant de préférence un adhésif de type silicone.

8. Ruban multicouche selon l'une quelconque des revendications précédentes dans lequel la charge minérale est sélectionnée parmi le groupe constitué de carbonate de calcium, sulfate de calcium, sulfate de barium, silicate d'aluminium (hydraté tel que la kaolinite par exemple), l'alumine, l'hydroxide d'aluminium (ATH), magnésium, l'oxyde de zinc, le mica, la craie, le talc, le dioxyde de titane, la silice, l'argile (tel que la bentonite ou la montmorillonite), le kieselguhr (diatomées) ou la dolomite et leur mélange.

9. Ruban multicouche selon l'une quelconque des revendications précédentes dans lequel la charge minérale est sélectionnée parmi le groupe constitué de carbonate de calcium, des diatomées (kieselguhr) et/ou de la silice et leur mélange.

10. Ruban multicouche selon l'une quelconque des revendications précédentes dans lequel la couche polymérique présente une porosité (5) comprise entre 40 et 75% en volume, de préférence entre 50 et 60% en volume.

11. Ruban multicouche selon la revendication 10 dans lequel la porosité de la couche polymérique (2) est de type fermée.

12. Ruban multicouche selon l'une quelconque des revendications précédentes dans lequel la couche polymérique (2) comprend en outre un agent de couplage permettant de coupler la charge minérale à la polyoléfine.

13. Ruban multicouche selon la revendication 10 dans lequel l'agent de couplage est un silane, de préférence un beta-(3,4-époxycyclohexyl)éthyl triméthoxy-silane.

14. Utilisation du ruban multicouche selon l'une quelconque des revendications 1 à 13 pour l'enrubannage d'un conducteur électrique.

## Patentansprüche

1. Mehrschichtiges Band (1), der mindestens umfasst:
- eine Schicht (3) im Wesentlichen auf der Basis von Glimmer,
- eine Polymerschicht (2), die 60 bis 85 Gew.-% eines mineralischen Füllstoffs (4) und 15 bis 40 Gew.-% eines Polymers umfasst
und wobei das Polymer aus der Gruppe ausgewählt ist, die aus Polyolefin, Polyester, Polyamid und halogenierten Polyolefinen besteht.

2. Mehrschichtiges Band nach Anspruch 1, wobei das Polymer ein Polyolefin ist, das aus der Gruppe ausgewählt ist, die aus Polyethylen, Polypropylen, Propylen-Copolymer und Ethylen-Copolymeren und aus mindestens einem Alpha-Olefin mit 3 bis 8 Kohlenstoffen besteht.

3. Mehrschichtiges Band nach Anspruch 2, wobei das Polyolefin ein Polyethylen oder ein Gemisch von Polyethylenen verschiedener Dichten ist.

4. Mehrschichtiges Band nach Anspruch 3, wobei das Polyethylen ein HDPE umfasst.

5. Mehrschichtiges Band nach einem der vorangehenden Ansprüche, wobei die Schicht im Wesentlichen auf der Basis von Glimmer eine eventuell mit einem Harz imprägniere Glimmerpapierschicht ist.

6. Mehrschichtiges Band nach Anspruch 5, **dadurch gekennzeichnet, dass** das Imprägnierharz der Glimmerschicht auf der Basis von Silikon ist.

7. Mehrschichtiges Band nach einem der vorangehenden Ansprüche, wobei die Schicht im Wesentlichen auf der Basis von Glimmer (3) auf die Polymerschicht (2) mittels eines Haftmittels geklebt ist, wobei das Haftmittel vorzugsweise ein Haftmittel vom Typ Silikon ist.

8. Mehrschichtiges Band nach einem der vorangehenden Ansprüche, wobei der mineralische Füllstoff aus der Gruppe ausgewählt ist, die von dem Calciumcarbonat, dem Calciumsulfat, dem Bariumsulfat, dem Aluminiumsilikat (hydriert wie beispielsweise das Kaolinit), dem Aluminiumoxid, dem Aluminiumhydroxid (ATH), dem Magnesium, dem Zinkoxid, dem Glimmer, der Kreide, dem Talk, dem Titandioxid, dem Siliziumoxid, dem Ton (wie beispielsweise dem Bentonit oder dem Montmorillonit), dem Kieselguhr (Diatomeen) oder dem Dolomit und deren Gemisch gebildet ist.

9. Mehrschichtiges Band nach einem der vorangehenden Ansprüche, wobei der mineralische Füllstoff aus der Gruppe ausgewählt ist, die aus Calciumcarbonat, Diatomeen (Kieselguhr) und/oder Siliziumoxid und deren Gemisch gebildet ist.

10. Mehrschichtiges Band nach einem der vorangehenden Ansprüche, wobei die Polymerschicht eine Porosität (5) von 40 bis 75 Vol.-%, vorzugsweise von 50 bis 60 Vol.-%, aufweist.

11. Mehrschichtiges Band nach Anspruch 10, wobei die Porosität der Polymerschicht (2) geschlossenen Typs ist.

12. Mehrschichtiges Band nach einem der vorangehenden Ansprüche, wobei die Polymerschicht (2) ferner ein Kopplungsmittel umfasst, das erlaubt, den mineralischen Füllstoff an das Polyolefin zu koppeln.

13. Mehrschichtiges Band nach Anspruch 10, wobei das Kopplungsmittel ein Silan, vorzugsweise ein Beta-(3,4-epoxycyclohexyl)ethyltrimethoxy-silan, ist.

14. Verwendung des mehrschichtigen Bands nach einem der Ansprüche 1 bis 13 zum Umhüllen eines elektrischen Leiters.

## Claims

1. A multilayer tape (1) comprising at least:
- one essentially mica-based layer (3),
- one polymeric layer (2) comprising from 60 to 85% by weight of a mineral filler (4) and from 15 to 40% by weight of a polymer and wherein said polymer is selected from the group consisting in polyolefin, polyester, polyamide and halogenated polyolefins.

2. The multilayer tape according to claim 1, wherein the polymer is a polyolefin selected from the group consisting in polyethylene, polypropylene, propylene copolymer, and copolymers of ethylene and of at least one alpha-olefin comprising 3 to 8 carbons.

3. The multilayer tape according to claim 2, wherein the polyolefin is a polyethylene or a mixture of polethylenes with different densities.

4. The multilayer tape according to claim 3, wherein the polyethylene comprises an HDPE.

5. The multilayer tape according to any of the preceding claims, wherein the essentially mica-based layer is a mica paper layer, optionally impregnated with a resin.

6. The multilayer tape according to claim 5, **characterized in that** the impregnation resin of the mica layer is based on silicone.

7. The multilayer tape according to any of the preceding claims, wherein the essentially mica-based layer (3) is bonded to the polymeric layer (2) by means of an adhesive, said adhesive preferably being an adhesive of the silicone type.

8. The multilayer tape according to any of the preceding claims, wherein the mineral filler is selected from the group consisting of calcium carbonate, calcium sulfate, barium sulfate, aluminium silicate (as a hydrate such as kaolinite for example), alumina, aluminium hydroxide (ATH), magnesium, zinc oxide, mica, chalk, talcum, titanium dioxide, silica, clay (such as bentonite or montmorillonite), kieselguhr (diatoms) or dolomite and a mixture thereof.

9. The multilayer tape according to any of the preceding claims, wherein the mineral filler is selected from the group consisting of calcium carbonate, diatoms (kieselguhr) and/or silica and a mixture thereof.

10. The multilayer tape according to any of the preceding claims, wherein the polymeric layer has porosity (5) comprised between 40 and 75% by volume, preferably between 50 and 60% by volume.

11. The multilayer tape according to claim 10, wherein the porosity of the polymeric layer (2) is of the closed type.

12. The multilayer tape according to any of the preceding claims, wherein the polymeric layer (2) further comprises a coupling agent for coupling the mineral filler with the polyolefin.

13. The multilayer tape according to claim 10, wherein the coupling agent is a silane, preferably beta-(3,4-epoxycyclohexyl)ethyl trimethoxysilane.

14. The use of the multilayer tape according to any of claims 1 to 13 for wrapping an electric conductor.
